# EUROPEAN PATENT SPECIFICATION

(11) **EP 2 635 923 B1**
(45) Date of publication and mention of the grant of the patent: **12.01.2022**
(21) Application number: 11791359.0
(22) Date of filing: 04.11.2011
(51) Int. Cl.: G01V 1/38

(54) **ACTIVE STEERING CURVED AND FLARED SEISMIC STREAMERS**
GEKRÜMMTE UND AUFGEWEITETE SEISMISCHE STREAMER MIT AKTIVER LENKUNG
FLÛTES SISMIQUES ARRONDIES ET ÉVASÉES À GUIDAGE ACTIF

(30) Priority: 05.11.2010 US 410638 P
(43) Date of publication of application: 11.09.2013
(73) Proprietor: ConocoPhillips Company, Houston, Texas 77079 (US)
(72) Inventor: EICK, Peter, M., Houston TX 77094 (US); BREWER, Joel, D., Houston TX 77094 (US)
(74) Representative: Simpson, Paul Christopher
(86) International application number: PCT/US2011/059376
(87) International publication number: WO 2012/061735

(56) References cited:
- WO-A2-01/61380
- US-A1- 2008 285 381
- US-A1- 2010 002 536
- US-A1- 2010 142 317

## Description

None.

### FIELD OF THE INVENTION

This invention relates generally to seismic data acquisition in marine environments using towed streamers behind a tow vessel.

### BACKGROUND OF THE INVENTION

Marine seismic exploration is used to investigate and map the structures and character of subsurface geological formations underlying a body of water. Marine seismic data is typically gathered by towing seismic sources (e.g., air guns) and seismic receivers (e.g., hydrophones) through a body of water behind one or more marine vessels. As the seismic sources and receivers are towed through the water, the seismic sources generate acoustic pulses that travel through the water and into the earth, where they are reflected and/or refracted by interfaces between subsurface geological formations. The seismic receivers sense the resulting reflected and/or refracted energy, thereby acquiring seismic data that provides information about the geological formations underlying the body of water. Basically a towed seismic source emits a wavefield that propagates down through the water and into earth and is reflected and/or refracted by interfaces between subsurface geological formations then propagates back to the surface where the receivers detect and discretely sample the wavefield.

Typically, an array of thousands of individual seismic receivers is used to gather marine seismic data. The seismic receivers are generally uniformly spaced and attached to streamer cables that are towed behind the marine vessel. It is known that the relative positions of the marine seismic receivers during seismic data acquisition can affect the quality and utility of the resulting seismic data. The current teaching is to construct the towing configuration for the streamers such that the ends of the streamers nearest the towing vessel, (commonly known as "near receivers" or "head of the streamers" or "leading end") are all laterally spaced at equal distance along the length of the streamers. Typically contracts require that the streamers be maintained equally spaced to within 2% of nominal at the head of the streamers or the towing configuration must be adjusted to get "in spec". In this configuration, uniform coverage of the surface and subsurface is achieved by at least the near receivers. It is known that the wavefield detected by the sensors is poorly sampled in the lateral direction (perpendicular to the streamers) in most streamer configurations because wider spacing size is necessary to make the cost of the survey affordable and to avoid tangles of the equipment behind the boat. Normally the spacing between streamers is substantially wider than the station spacing down the length of streamer and typically varies from between 4 and 32 to 1. Thus, for example, the normal station spacing along the streamer is usually 12.5 meters between hydrophones while the spacing between two adjacent streamers may be 100 meters, to create a ratio of 8 to 1. Common station spacing range down to 3.125 meters and streamer spacing can be as near as 37.5 meters. Thus, if the spacing of the streamers at the head of the streamers is large, the wavefield detected by the receivers is highly under sampled in the lateral direction relative to the sampling along or down the streamer. For clarity, "lateral" is meant to describe perpendicular to the length of the streamer.

However, unpredictable environmental forces such as currents, winds, and seas present in many marine environments can cause the relative positions of marine seismic receivers to vary greatly as they are towed through the water. Therefore, it is becoming common to use steering devices (known as "birds") to be attached to the streamer cables so that the relative positions (both lateral and vertical) of the seismic receivers can be controlled as they are towed through the water. The control of the streamer positions in the lateral direction down the streamer currently helps to maintain desired spacing between streamers, but provides for new opportunities to shape the streamers to enhance the data collected in a marine survey.

### BRIEF SUMMARY OF THE DISCLOSURE

The invention more particularly relates to a process for acquiring seismic data in a marine environment using seismic receivers mounted to streamers in the water following behind a tow vessel, as claimed in claim 1.

### BRIEF DESCRIPTION OF THE DRAWINGS

A more complete understanding of the present invention and benefits thereof may be acquired by referring to the follow description taken in conjunction with the accompanying drawings in which:
Figure 1 is top view of a marine seismic system not according to the invention (but which is provided to help illustrate the invention) including a tow vessel towing streamers, only two of which are shown, to illustrate the features of the present invention; and
Figure 2 is top view of a second orientation of the streamers of a marine seismic system where the features of the present invention may be recognized and appreciated.

### DETAILED DESCRIPTION

Turning now to the detailed description of the preferred arrangement or arrangements of the present invention, it should be understood that the inventive features and concepts may be manifested in other arrangements and that the scope of the invention is not limited to the embodiments described or illustrated. The scope of the invention is intended only to be limited by the scope of the claims that follow.

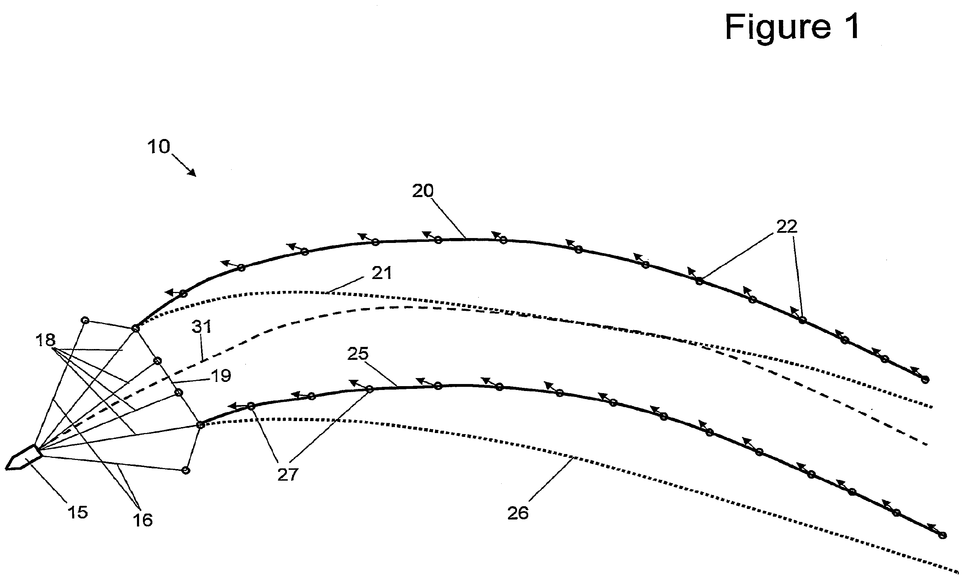

As shown in Figure 1, a marine seismic data acquisition system not in accordance with the present invention is generally indicated by the arrow 10. The system 10 includes a tow vessel 15 that is shown making a broad turn to its left. Trailing behind the tow vessel 15 is a series of streamers where only the two outside streamers 20 and 25 are shown for simplicity of illustration. In particular, the streamers 20 and 25 are shown to be following the true path of the vessel or the navigated path 31. In a conventional arrangement, the streamers 20 and 25 would be pulled laterally by the cable tension away from a path that follows the navigated path into shapes shown in dotted lines 21 and 26. These shapes 21 and 26 reflect paths where the streamers have cut the corner across a large round turn and where the streamers have literally been dragged laterally off the navigate path 31. In the present invention, the lateral forces on the streamers 20 and 25 are still present, however, the birds 22 on streamer 20 and birds 27 on streams 25 are operated to resist and counteract the lateral dragging forces created by a turning vessel.

Each of the streamers is connected to the tow vessel 15 by tow lines 18 and a lateral guide line 19 is used to maintain the leading end of the streamers to be a design separation distance. Outrigger lines 16 and outrigger water wings, mini-wings, paravanes or "doors" 17 are used to draw the guide line 19 relatively taught and thereby pull the leading ends of the streamers to their design spacing.

The counteracting steering of each bird 22 and 27 is shown by arrows at the birds which includes vanes or other hydrofoil shape that can steer itself in the water using the forward movement of the streamer. The amount of counteractive steering force exerted by each of the birds 22 and 27 is not significant, but as Figure 1 suggests, the far ends of the streamers will follow a significantly different path as the streamer undertakes a more accurate shape through the turns. Each of the birds 22 and 27 are arranged to use a GPS input from the streamer and acoustic images for their own location and are operated to steer relative to the navigated path 31 of the vessel 15. The computational activity may take place within the birds themselves or simply provided by communication from a central navigation processing capability on the vessel 15 or from another location.

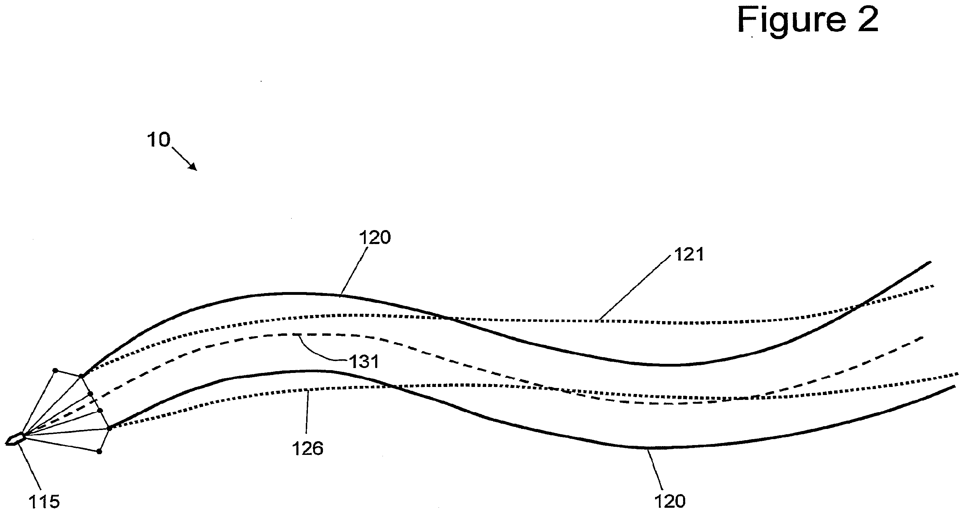

Turning to Figure 2, the benefits of the present invention are provided when the vessel 115 takes a more complicated path and the streamers 120 and 125 are in a flared streamer configuration so are subjected to significant tension causing the streamers to "want" to assume a more linear shape as shown by dotted lines 121 and 126. In the present invention, the "S" shape is used wherein the streamers are maintaining greater fidelity to the navigated path 131 of the vessel 115. Note that the birds 122 and 127 within the first half of the streamers 120 and 125 are counteracting a turn to the left by exerting a pull to the right while the birds at the latter half of the streamers 120 and 125 are, at the very same time, counteracting a turn to the right by exerting a pull to the left. The flared streamer configuration has the streamer separation at the head of the streamer being smaller than the streamer separation at the tail of the streamer. The birds used to control the lateral streamer separation actively steer to maintain this configuration while concurrently steering so that the streamers' 120 and 125 path mimics the vessel 115 path. In addition to guiding the streamers along the arcuate shaped path relative to the navigated path, the streamers are also flared such that the spacing of the streamers at the ends nearest the vessel 15 are closer together then they are at the far ends. Having the streamers spaced farther from one another provides greater certainty of coverage with the far receivers. It is not uncommon because of currents in the sea that gaps between adjacent passes of the streamers are created, especially at the far ends which are most subject to currents. Having the streamers flared reduces the likelihood of gaps. In the preferred embodiment, the outside streamers are flared the most and are at least five percent wider at the far end as compared to the near end or end nearest the tow vessel 15. In some circumstance, the flaring may preferably be ten percent, 15 percent, 20 percent, 25 percent, 30 percent, 40 percent and even at least 50 percent greater at the far end as compared to the spacing at the near end.

It should be noted that in conventional seismic acquisition, the tow vessel 15 typically tows a relatively straight line path through a survey area in a near uniform streamer separation configuration and then makes broad turns outside the survey area so that all of the issues associated with long streamers are sorted out prior to re-entering the survey area for further surveying. Seismic acquisition is not typically taken during turns. To the extent that turns are performed while actively taking seismic data, the birds are used to maintain the spread of the streamers and not countersteer the streamers to maintain fidelity to the navigated path of the vessel and a flared streamer configuration.

Typically, at least four streamers are used and it is more common to have 6, 8, 10 or 12 streamers. Only two outside streamers are shown for simplicity.

As noted above, according to the present invention, the counteractive steering is coupled with a flared streamer arrangement as described in US Patent Application 12/167,683 filed July 3, 2008. In addition, an arrangement with four or more streamers may have the streamers unequally spaced as shown in US Patent Application 61/353,089, filed June 9, 2010. US 2008/285381, US 12/167683 and US 2010/142317 disclose a process for acquiring seismic data in a marine environment using seismic receivers mounted to streamers in the water following behind a tow vessel.

When the vessel is steered in a curved path the streamers are actively steered by birds that control the lateral streamer separation so that the path of the streamers mimics the path of the vessel and the streamer separation is maintained.

In closing, it should be noted that the discussion of any reference is not an admission that it is prior art to the present invention, especially any reference that may have a publication date after the priority date of this application.

Although the systems and processes described herein have been described in detail, it should be understood that various changes, substitutions, and alterations can be made without departing from the scope of the invention as defined by the following claims. Those skilled in the art may be able to study the preferred embodiments and identify other ways to practice the invention that are not exactly as described herein.

The invention is specifically intended to be as broad as the claims below.

## Claims

1. A process for acquiring seismic data in a marine environment using seismic receivers mounted to streamers (20, 120) in the water following behind a tow vessel (15), the process comprising:
a) installing a series of guidance devices (22, 27) along the length of each streamer (20, 120) with a steerable element (22, 27) providing lateral streamer control;
b) directing the tow vessel (15) to follow a path through the water where the path that the tow vessel has taken is a navigated path and where the navigated path includes turns and is an "S" shape;
the process **characterized in that** it further comprises
c) countersteering the guidance devices (22, 27) to cause the streamers (20, 120) to maintain an "S" shape around a turn and maintaining the path of the streamers to follow the tow vessel navigated "S" shape path;
and wherein each guidance device (22, 27) uses its steerable element hydrofoil to exert a force to steer itself along a path relative to the navigated path, the forces exerted vary over time and concurrently different forces between guidance devices (22, 27) and the streamers (20. 120) are towed in flared configuration such that the separation between the streamers at the head of the streamers is smaller than the separation between the streamers at the tail of the streamers.

2. The process according to Claim 1 wherein each guidance device (22, 27) uses its steerable element to exert a force to steer itself along a path relative to the navigated path and wherein the forces exerted vary over time and concurrently different forces between guidance devices.

3. The process according to Claim 1 or Claim 2 wherein the flaring of the streamers (20, 120) is at least five percent greater at the far ends of the streamers as compared to the near ends of the streamer or the ends closest to the tow vessel.

4. The process according to Claim 1 or Claim 2 wherein the flaring of the streamers (20, 120) is at least ten percent greater at the far ends of the streamers as compared to the near ends of the streamer or the ends closest to the tow vessel.

5. The process according to Claim 1 or Claim 2 wherein the flaring of the streamers (20, 120) is at least fifteen percent greater at the far ends of the streamers as compared to the near ends of the streamer or the ends closest to the tow vessel.

6. The process according to Claim 1 or Claim 2 wherein the flaring of the streamers (20, 120) is at least twenty percent greater at the far ends of the streamers as compared to the near ends of the streamer or the ends closest to the tow vessel.

7. The process according to Claim 1 or Claim 2 wherein the flaring of the streamers (20, 120) is at least twenty five percent greater at the far ends of the streamers as compared to the near ends of the streamer or the ends closest to the tow vessel.

8. The process according to Claim 1 or Claim 2 wherein the flaring of the streamers (20, 120) is at least thirty percent greater at the far ends of the streamers as compared to the near ends of the streamer or the ends closest to the tow vessel.

9. The process according to Claim 1 or Claim 2 wherein the flaring of the streamers (20, 120) is at least forty percent greater at the far ends of the streamers as compared to the near ends of the streamer or the ends closest to the tow vessel.

10. The process according to Claim 1 or Claim 2 wherein the flaring of the streamers (20, 120) is at least fifty percent greater at the far ends of the streamers as compared to the near ends of the streamer or the ends closest to the tow vessel.

## Patentansprüche

1. Prozess zum Beschaffen seismischer Daten in einer Meeresumgebung unter Verwendung seismischer Empfänger, die an Streamern (20, 120) im Wasser einem Schleppschiff (15) folgend befestigt sind, wobei der Prozess Folgendes umfasst:
a) Installieren einer Reihe von Führungsvorrichtungen (22, 27) entlang der Länge jedes Streamers (20, 120) mit einem lenkbaren Element (22, 27), das seitliche Streamer-Steuerung bereitstellt;
b) Ausrichten des Schleppschiffs (15), einem Pfad durch Wasser zu folgen, wo der Pfad, den das Schleppschiff genommen hat, ein navigierter Pfad ist und wo der navigierte Pfad Kurven beinhaltet und in einer "S"-Form ist;
der Prozess **dadurch gekennzeichnet, dass** er weiter Folgendes umfasst
c) Gegenlenken der Führungsvorrichtungen (22, 27), um die Streamer (20, 120) zu veranlassen, eine "S"-Form um eine Kurve beizubehalten und den Pfad der Streamer dem vom Schleppschiff navigierten Pfad in "S"-Form folgend beizubehalten;
und wobei jede Führungsvorrichtung (22, 27) ihre lenkbare Elementtragfläche verwendet, um eine Kraft auszuüben, um sich selbst entlang eines Pfads relativ zu dem navigierten Pfad zu lenken, die ausgeübten Kräfte im Laufe der Zeit variieren und sich gleichzeitig von Kräften zwischen Führungsvorrichtungen (22, 27) unterscheiden, und die Streamer (20, 120) in aufgeweiteter Konfiguration geschleppt werden, sodass der Abstand zwischen den Streamern beim Kopf der Streamer kleiner ist als der Abstand zwischen den Streamern am Heck der Streamer.

2. Prozess nach Anspruch 1, wobei jede Führungsvorrichtung (22, 27) ihr lenkbares Element verwendet, um eine Kraft auszuüben, um sich selbst entlang eines Pfads relativ zu dem navigierten Pfad zu lenken, und wobei die ausgeübten Kräfte im Laufe der Zeit variieren und sich gleichzeitig von Kräften zwischen Führungsvorrichtungen unterscheiden.

3. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens fünf Prozent größer ist.

4. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens zehn Prozent größer ist.

5. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens fünfzehn Prozent größer ist.

6. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens zwanzig Prozent größer ist.

7. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens fünfundzwanzig Prozent größer ist.

8. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens dreißig Prozent größer ist.

9. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens vierzig Prozent größer ist.

10. Prozess nach Anspruch 1 oder Anspruch 2, wobei die Aufweitung der Streamer (20, 120) an den entfernt gelegenen Enden der Streamer verglichen mit den nah gelegenen Enden des Streamers oder den Enden am nächsten zum Schleppschiff mindestens fünfzig Prozent größer ist.

## Revendications

1. Procédé d'acquisition de données sismiques dans un environnement marin en utilisant des récepteurs sismiques montés sur des flûtes (20, 120) dans l'eau de sillage d'un remorqueur (15), le procédé comprenant :
a) l'installation d'une série de dispositifs de guidage (22, 27) sur la longueur de chaque flûte (20, 120) avec un élément orientable (22, 27) assurant une commande latérale de flûte ;
b) la direction du remorqueur (15) pour suivre un trajet dans l'eau, le trajet du remorqueur étant un trajet de navigation et le trajet de navigation inclut des virages et est en forme de S ;
le procédé étant **caractérisé en ce qu'**il comprend en outre
c) le contre-braquage des dispositifs de guidage (22, 27) pour amener les flûtes (20, 120) à maintenir une forme de S autour d'un virage et à maintenir le trajet des flûtes pour suivre le trajet de navigation en forme de S du remorqueur ;
et dans lequel chaque dispositif de guidage (22, 27) utilise son élément orientable hydroglisseur pour exercer une force pour s'orienter le long d'un trajet par rapport au trajet de navigation, la force exercée faisant varier simultanément dans le temps différentes forces entre les dispositifs de guidage (22, 27), et les flûtes (20, 120) sont remorquées dans une configuration évasée de sorte que la séparation entre les flûtes à la tête des flûtes soit inférieure à la séparation entre les flûtes à la queue des flûtes.

2. Procédé selon la revendication 1, dans lequel chaque dispositif de guidage (22, 27) utilise son élément orientable pour exercer une force pour s'orienter le long d'un trajet par rapport au trajet de navigation et dans lequel la force exercée fait varier simultanément dans le temps différentes forces entre les dispositifs de guidage.

3. Procédé selon la revendication 1 ou 2, dans lequel l'évasement des flûtes (20, 120) est au moins cinq pour cent plus grand aux extrémités éloignées des flûtes qu'aux extrémités proches des flûtes ou qu'aux extrémités les plus proches du remorqueur.

4. Procédé selon la revendication 1 ou 2, dans lequel l'évasement des flûtes (20, 120) est au moins dix pour cent plus grand aux extrémités éloignées des flûtes qu'aux extrémités proches des flûtes ou qu'aux extrémités les plus proches du remorqueur.

5. Procédé selon la revendication 1 ou 2, dans lequel l'évasement des flûtes (20, 120) est au moins quinze pour cent plus grand aux extrémités éloignées des flûtes qu'aux extrémités proches des flûtes ou qu'aux extrémités les plus proches du remorqueur.

6. Procédé selon la revendication 1 ou 2, dans lequel l'évasement des flûtes (20, 120) est au moins vingt pour cent plus grand aux extrémités éloignées des flûtes qu'aux extrémités proches des flûtes ou qu'aux extrémités les plus proches du remorqueur.

7. Procédé selon la revendication 1 ou 2, dans lequel l'évasement des flûtes (20, 120) est au moins vingt-cinq pour cent plus grand aux extrémités éloignées des flûtes qu'aux extrémités proches des flûtes ou qu'aux extrémités les plus proches du remorqueur.

8. Procédé selon la revendication 1 ou 2, dans lequel l'évasement des flûtes (20, 120) est au moins trente pour cent plus grand aux extrémités éloignées des flûtes qu'aux extrémités proches des flûtes ou qu'aux extrémités les plus proches du remorqueur.

9. Procédé selon la revendication 1 ou 2, dans lequel l'évasement des flûtes (20, 120) est au moins quarante pour cent plus grand aux extrémités éloignées des flûtes qu'aux extrémités proches des flûtes ou qu'aux extrémités les plus proches du remorqueur.

10. Procédé selon la revendication 1 ou 2, dans lequel l'évasement des flûtes (20, 120) est au moins cinquante pour cent plus grand aux extrémités éloignées des flûtes qu'aux extrémités proches des flûtes ou qu'aux extrémités les plus proches du remorqueur.
